# EUROPÄISCHE PATENTSCHRIFT

(11) **EP 1 583 859 B1**
(45) Veröffentlichungstag und Bekanntmachung des Hinweises auf die Patenterteilung: **17.04.2013**
(21) Anmeldenummer: 03785741.4
(22) Anmeldetag: 04.12.2003
(51) Int. Cl.: G05B 9/02, A47L 15/00, A47L 15/46, D06F 33/02, D06F 37/42

(54) **Haushaltgerät mit einem elektronischen Bauteilsystem**
Household appliance with an electronic component system
Appareil ménager avec un système de composants électroniques

(30) Priorität: 19.12.2002 DE 10259738
(43) Veröffentlichungstag der Anmeldung: 12.10.2005
(73) Patentinhaber: BSH Bosch und Siemens Hausgeräte GmbH, 81739 München (DE)
(72) Erfinder: ROSENBAUER, Michael, 86756 Reimlingen (DE); SCHWEIER, Peter, 86735 Forheim (DE)
(86) Internationale Anmeldenummer: PCT/EP2003/013725
(87) Internationale Veröffentlichungsnummer: WO 2004/057087

(56) Entgegenhaltungen:
- EP-A- 0 068 266
- DE-A- 2 725 807
- DE-A- 10 039 444
- DE-A- 19 547 393
- US-A- 5 594 439

## Beschreibung

Die Erfindung betrifft ein Haushaltgerät nach dem Oberbegriff des Patentanspruchs 1.

Es sind verschiedene Haushaltgeräte bekannt, wie beispielsweise Geschirrspülmaschinen oder Waschmaschinen, bei denen Sicherheitskomponenten vorgesehen sind, um Schäden zu vermeiden. Besonders bei wasserführenden Haushaltgeräten besteht das Problem, dass eine fehlerhafte Regelung der Wasserzufuhr zu einem Wasseraustritt aus dem Haushaltgerät und damit zu größeren Schäden führen kann.

Aus DE 42 20 718 ist ein wasserführendes Haushaltgerät bekannt, das eine Sicherheitsvorrichtung zur Überwachung eines Sicherheitsniveaus in einem mit Flüssigkeit gefülltem Behälter aufweist. Der Behälter ist über ein in einer Flüssigkeitszuleitung angeordnetes elektromagnetisches Ventil befüllbar. Das Haushaltgerät umfasst wenigstens einen weiteren Behälter, wobei als Sicherheitsvorrichtung jedem Behälter ein durch das Flüssigkeitsniveau in dem jeweiligen Behälter beeinflussbarer Niveaufühler, der einen Schalter beaufschlagt zugeordnet ist. Darüber hinaus ist den untereinander angeordneten Behältern nur ein Schalter zugeordnet. Die Niveaufühler sind als Schwimmer ausgebildet und der Schalter wird von den Schwimmern unabhängig voneinander betätigt.

Der Nachteil der in DE 42 20 718 beschriebenen Sicherheitsvorrichtung besteht darin, dass zur Erfassung des Füllstandes rein mechanische Komponenten verwendet werden. Dies ist mit einem erheblichen Aufwand an beweglichen Teilen verbunden, bei denen ein erhöhtes Risiko eines Defekts und damit eines Versagens der Sicherheitsvorrichtung besteht. Darüber hinaus benötigen mechanische Komponenten aufgrund ihrer Dimensionen viel Bauraum im Haushaltgerät.

In DE 199 45 925 ist ein wasserführendes Haushaltgerät mit einem Behälter für Flüssigkeit beschrieben, der über ein in einer Flüssigkeitszuleitung angeordnetes Ventil befüllbar ist und in dem ein Füllstand der Flüssigkeit zur Überwachung wenigstens eines Sicherheitsniveaus von einer Sicherheitsvorrichtung erfassbar ist. Diese Sicherheitsvorrichtung ist als ein optisches Lichtleitsystem zur Reflexion eines Lichtstrahls ausgebildet, durch das der Füllstand anhand einer Änderung des Reflexionsverhaltens an wenigstens einer reflektierenden Stelle erfasst und zur Überwachung des Sicherheitsniveaus benutzt wird. Das optische Lichtleitsystem ist mit einer elektronischen Auswerteeinrichtung gekoppelt, die bei Empfang zumindest eines Überwachungssignals vom Lichtleitsystem wenigstens eine Sicherheitsmaßnahme initiiert.

Der Nachteil der in DE 199 45 925 beschriebenen Einrichtung besteht darin, dass im Falle einer Fehlfunktion in der elektronischen Auswerteeinrichtung oder eines Ausfalls der elektronischen Auswerteeinrichtung die Sicherheitsmaßnahme entweder nicht oder fehlerhaft initiiert wird, so dass die Sicherheitsmaßnahme nicht greift und es zu Schäden kommen kann.

Aus der DE 27 35 807 A1 ist eine Einrichtung zur Überwachung des Betriebsstroms eines Haushaltsgerätes, insbesondere einer Geschirrspül- oder Waschmaschine bekannt, bei der ein Betriebsstrom während eines Programmablaufs überwacht wird und mit einem abgespeicherten Summenstromverlauf verglichen wird, wobei bei Abweichungen auf einen Fehlerfall geschlossen wird.

Aus der DE 195 47 393 A1 ist ein Haushaltsgerät mit einer elektronischen Programmsteuerung bekannt, mit dem vollständige Unterbrechungen oder dauerhafte Kurzschlüsse eines angesteuerten Stromkreises erkannt werden können. Wenn die elektronische Programmsteuerung erkennt, dass ein Verbraucher unzulässig angesteuert wird, wird von dem Steuerprogramm eine Fehlerbehandlungsroutine aufgerufen.

Aus der DE 100 39 444 A1 ist ein Haushaltsgerät bekannt, dass bei Ausfall einzelner Komponenten des Haushaltsgeräts in einem eingeschränkten Notbetrieb weiterbetrieben werden kann. Dabei kann vorgesehen sein, dass das Gerät von einer Person oder über eine Servicestelle über eine Fernbedienung auf Notbetrieb umschaltbar ist oder dass die Steuereinrichtung derart ausgebildet ist, dass bei Erkennen eines Defekts automatisch auf ein Notprogramm umgeschaltet wird.

Aus der EP 0 068 266 A1 ist ein Hausgerät bekannt, bei dem ein Kurzschluss von Steuerelementen wie TRIACs oder Relais erkannt werden kann oder die Abschaltung von einem Kontrollelement, dass beispielsweise einer Tür zugeordnet ist. Hierzu werden logische Signale über eine exklusive Oderfunktion ausgeweitet.

Aus der US 5,594,439 ist ein Verfahren zur Diagnose von integrierten Schaltkreisen bekannt, bei dem Abweichungen von der Linearität erfasst werden sowie Kompensationskoeffizienten bestimmt werden, um die Nichtlinearität eines Digitalanalogwandlers zu kompensieren.

Der Erfindung liegt die Aufgabe zugrunde, Schäden bei einem Ausfall oder einer Fehlfunktion von elektronischen Bauteilen eines Haushaltgeräts zu vermeiden.

Diese Aufgabe wird dadurch gelöst, dass das elektronische Bauteilsystem eine Einrichtung zur Generierung eines Wechselspannungssignals umfasst, wobei mit dem Wechselspannungssignal der Bauteilausfall detektierbar ist. Bei einem Wechselspannungssignal kann anhand seiner Amplitude eine Fehlfunktion und/oder ein Ausfall von Bauteilen erkannt werden.

Dadurch dass der Bauteilausfall des elektronischen Bauteilsystems erkennbar ist, wird auf einfache Weise sichergestellt, dass Schäden vermieden werden, da die Regelung auf einen Bauteilausfall reagieren kann, wobei hier unter Bauteilausfall auch eine Fehlfunktion des Bauteils verstanden wird. Ist das elektronische Bauteilsystem derart ausgelegt, dass das Haushaltgerät bei einem Bauteilausfall in einem vordefinierten Zustand ist, so ist sichergestellt, dass es zu keinen Schäden kommen kann, insbesondere dann, wenn der vordefinierte Zustand Sicherheitsvorschriften für das Haushaltgerät genügt. Ein weiterer Vorteil besteht darin, dass Sicherheitsfunktionen ohne mechanische Komponenten, die ein Verschleißrisiko bedeuten, realisiert werden können, wodurch Bauraum gespart wird und wodurch eine kostengünstige Realisierung möglich ist.

Nach einer weiteren bevorzugten Ausführungsform der Erfindung ist die Einrichtung zur Generierung des Wechselspannungssignals ein Mikroprozessor. Dies ist besonders vorteilhaft, da mit dem Mikroprozessor eine intelligente Regelung realisierbar ist. Wenn der Mikroprozessor darüber hinaus auch zur Regelung anderer Abläufe in dem Haushaltgerät verwendet wird, können auf diese Weise zusätzliche Bauteile eingespart werden.

Nach einer weiteren bevorzugten Ausführungsform der Erfindung weist das elektronische Bauteilsystem ein Filter, vorzugsweise ein Hochpassfilter auf, das nur von dem Wechselspannungssignal passierbar ist. Auf diese Weise ist das Wechselspannungssigrial von einem Gleichspannungsanteil leicht trennbar.

Nach einer weiteren bevorzugten Ausführungsform der Erfindung umfasst das elektronische Bauteilsystem einen Detektor, mit dem das Wechselspannungssignal insbesondere nach Passieren des Filters detektierbar und/oder auswertbar ist. Auf diese Weise können Änderungen in der Amplitude des Wechselspannungssignals und damit Fehlfunktionen von Bauteilen erkannt werden.

In besonders vorteilhafter Weise ist der Detektor ein Mikroprozessor. Dadurch kann eine detektierte Amplitudenänderung des Wechselspannungssignals durch den Mikroprozessor direkt z.B. mittels Software ausgewertet werden. Darüber hinaus ist mit dem Mikroprozessor eine intelligente Regelung im Falle einer Fehlfunktion oder des Ausfalls eines Bauteils möglich.

Nach einer vorteilhaften Ausführungsform der Erfindung ist das elektronische Bauteilsystem ein Sensor- und/oder Aktorsystem, womit der Vorteil erreicht wird, dass mittels Sensoren Zustände des Haushaltgeräts erfassbar sind und mittels Aktoren diese Zustände beeinflusst werden können.

Weitere Merkmale der Erfindung und vorteilhafte Ausführungsformen der Erfindung sind in den Unteransprüchen gekennzeichnet.

Mit der Erfindung werden Schäden bei einem Ausfall oder einer Fehlfunktion von elektronischen Bauteilen eines Haushaltgeräts sicher vermieden.

Die Erfindung wird nachstehend anhand den in der Zeichnung dargestellten Ausführungsbeispielen erläutert. Es zeigen:
- Figur 1: ein Prinzipschaltbild eines elektronischen Sensor- und Aktorsystems zur Vermeidung von Schäden bei einem Ausfall oder einer Fehlfunktion von Bauteilen und
- Figur 2: einen schematischen Schaltplan des elektronischen Sensor- und Aktorsystems.

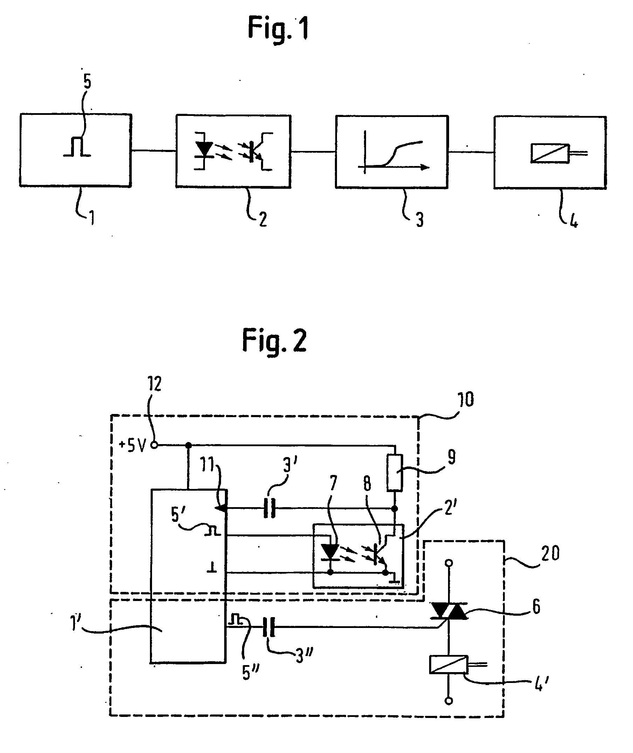

Das in Figur 1 in einem Prinzipschaltbild dargestellte elektronische Sensor- und Aktorsystem, welches insbesondere zur Regelung in Haushaltgeräten, wie z.B. Geschirrspülmaschinen oder Waschmaschinen, einsetzbar ist, umfasst einen Signalgenerator 1, z.B. einen Timer oder Mikroprozessor, einen Sensor 2, ein Hochpassfilter 3 und eine Auswerteeinheit oder Aktor 4. Der Signalgenerator 1 generiert ein Wechselspannungssignal, z.B. ein Rechtecksignal 5, das dem Sensor 2, der beispielsweise ein optischer Sensor ist, als Versorgungsspannung dient. Dem Sensor 2 nachgeordnet sorgt das Hochpassfilter 3 dafür, dass nur das Rechtecksignal 5 passieren kann und somit die Auswerteeinrichtung, d.h. den Aktor 4 erreicht. Ist der Sensor 2 defekt, so kann das Rechtecksignal 5 die Auswerteeinheit, d.h. den Aktor 4 nicht mehr erreichen und der Aktor 4 kann einen bestimmten Zustand einnehmen, der den Sicherheitsvorschriften genügt. Beispielsweise ist der Aktor 4 ein Ventil zur Flüssigkeitszufuhr, welches durch das Rechtecksignal 5 geöffnet wird und welches bei Fehlen des Rechtecksignals 5 geschlossen bleibt. Auf diese Weise wird die Flüssigkeitszufuhr bei einem Defekt in dem Sensor 2 unterbunden und es können keine Schäden auftreten.

In Figur 2 ist ein schematischer Schaltplan des elektronischen Sensor- und Aktorsystems gezeigt. Im oberen Teil des Schaltplans ist das Sensorsystem 10 mit einem optischen Sensor 2' veranschaulicht, der beispielsweise zur Füllstandsüberwachung dienen kann. Der untere Teil des Schaltplans zeigt das Aktorsystem 20 mit einem Ventil 4' als Aktor, das über eine Triacstufe 6 ansteuerbar ist.

Der Signalgenerator 1 ist hier ein Mikroprozessor 1' der Rechtecksignale 5' und 5" generiert. Das Rechtecksignal 5' dient einer Leuchtdiode 7 des optischen Sensors 2' als Versorgungsspannung. Das Licht der Leuchtdiode 7 wird von einem Phototransistor 8 des optischen Sensors 2' detektiert, so dass über eine Abschwächung des detektierten Lichts beispielsweise ein Füllstand überwachbar ist. Der Phototransistor 8 wird über einen Arbeitswiderstand 9 mit einer Versorgungsspannung 10 von 5 Volt versorgt. Das Ausgangssignal des Phototransistors 8 wird über einen Kondensator 3', der ein Hochpassfilter ist, wieder dem Mikroprozessor 1' als Eingangssignal 11 zugeleitet. Der Mikroprozessor 1' wertet das Eingangssignal 11 aus und kann somit beispielsweise anhand der Amplitude des Eingangssignals 11 die Sensorinformation, d.h. in diesem Fall den Füllstand erkennen.

Tritt ein Bauteilausfall auf, ist z.B. die Leuchtdiode 7 oder der Phototransistor 8 defekt, so kommt am Kondensator 3' kein Rechtecksignal 5' mehr an und somit erhält der Mikroprozessor 1' kein Eingangssignal 11, wodurch der Mikroprozessor erkennt, dass ein Bauteil des Sensorsystems ausgefallen ist.

Die Ansteuerung des Ventils 4' funktioniert auf die gleiche Weise. Der Mikroprozessor 1' generiert das Rechtecksignal 5". Dieses Rechtecksignal 5" passiert den Kondensator 3", der als Hochpassfilter fungiert. Durch das Rechtecksignal 5" wird die Triacstufe 6 angesteuert, so dass das Ventil 4' geöffnet wird.

Fällt der Mikroprozessor 1' aus, so kann kein Rechtecksignal 5" ausgegeben werden. Dadurch wird die Triacstufe 6 nicht mehr angesteuert und das Ventil 4' bleibt in einem vorbestimmten Zustand der den Sicherheitsvorschriften genügt, d.h. es bleibt geschlossen. Somit ist eine Flüssigkeitszufuhr unterbunden und Schäden sind ausgeschlossen.

Mit der Erfindung werden Schäden bei einem Ausfall oder einer Fehlfunktion von elektronischen Bauteilen eines Haushaltgeräts sicher vermieden.

## Patentansprüche

1. Haushaltgerät, insbesondere Geschirrspülmaschine oder Waschmaschine, mit wenigstens einem elektronischen Bauteilsystem (1, 2, 3, 4) zur Regelung des Haushaltsgeräts, wobei das wenigstens eine elektronische Bauteilsystem (1, 2, 3, 4) derart ausgestaltet ist, dass ein Bauteilausfall eines Bauteils des elektronischen Bauteilsystems (1, 2, 3, 4) erkennbar ist,
**dadurch gekennzeichnet,**
- **dass** das elektronische Bauteilsystem eine Einrichtung (1) zur Generierung eines Wechselspannungssignals (5) umfasst, und
- **dass** mit dem Wechselspannungssignal (5) der Bauteilausfall detektierbar ist.

2. Haushaltgerät nach Anspruch 1, **dadurch gekennzeichnet, dass** die Einrichtung (1) zur Generierung des Wechselspannungssignals (5', 5") ein Mikroprozessor (1') ist.

3. Haushaltgerät nach Anspruch 1 oder 2, **dadurch gekennzeichnet, dass** das Wechselspannungssignal ein Rechtecksignal (5) ist.

4. Haushaltgerät nach einem der Ansprüche 1 bis 3, **dadurch gekennzeichnet,**
- **dass** das elektronische Bauteilsystem ein Filter (3) umfasst, und
- **dass** das Filter (3) nur von dem Wechselspannungssignal (5) passierbar ist.

5. Haushaltgerät nach Anspruch 4, **dadurch gekennzeichnet, dass** das Filter ein Hochpassfilter (3', 3") ist.

6. Haushaltgerät nach einem der Ansprüche 1 bis 5, **dadurch gekennzeichnet,**
- **dass** das elektronische Bauteilsystem einen Detektor (8) umfasst, und
- **dass** mit dem Detektor (8, 1') das Wechselspannungssignal (5') detektierbar und/oder auswertbar ist.

7. Haushaltgerät nach Anspruch 4 und Anspruch 6, **dadurch gekennzeichnet, dass** mit dem Detektor (1') das Wechselspannungssignal (5') nach passieren des Filters (3') detektierbar und/oder auswertbar ist.

8. Haushaltgerät nach einem der Ansprüche 6 oder 7, **dadurch gekennzeichnet, dass** der Detektor ein Mikroprozessor (1') ist.

9. Haushaltgerät nach einem der vorangehenden Ansprüche, **dadurch gekennzeichnet, dass** das elektronische Bauteilsystem ein Sensor- (10) und/oder Aktorsystem (20) ist.

## Claims

1. Household appliance, in particular a dishwasher or washing machine, having at least one electronic component system (1, 2, 3, 4) for regulating the household appliance, the at least one electronic component system (1, 2, 3, 4) being embodied such that a component failure of a component of the electronic component system (1, 2, 3, 4) can be identified, **characterised in that**
- the electronic component system comprises a facility (1) for generating an alternating voltage signal (5) and
- the component failure can be detected using the alternating voltage signal (5).

2. Household appliance according to claim 1, **characterised in that** the facility (1) for generating the alternating voltage signal (5', 5") is a microprocessor (1').

3. Household appliance according to claim 1 or 2, **characterised in that** the alternating voltage signal is a square-wave signal (5).

4. Household appliance according to one of claims 1 to 3, **characterised in that**
- the electronic component system comprises a filter (3) and
- the filter (3) can only be passed by the alternating voltage signal (5).

5. Household appliance according to claim 4, **characterised in that** the filter is a high-pass filter (3', 3").

6. Household appliance according to one of claims 1 to 5, **characterised in that**
- the electronic component system comprises a detector (8) and
- the detector (8, 1') can be used to detect and/or analyse the alternating voltage signal (5').

7. Household appliance according to claim 4 and claim 6, **characterised in that** the detector (1') can be used to detect and/or analyse the alternating voltage signal (5') after it has passed the filter (3').

8. Household appliance according to one of claims 6 or 7, **characterised in that** the detector is a microprocessor (1').

9. Household appliance according to one of the preceding claims, **characterised in that** the electronic component system is a sensor system (10) and/or actuator system (20).

## Revendications

1. Appareil ménager, notamment lave-vaisselle ou lave-linge, comprenant au moins un système de composants électroniques (1, 2, 3, 4) destinés au réglage de l'appareil ménager, l'au moins un système de composants électroniques (1, 2, 3, 4) étant conçu de manière qu'une défaillance d'un composant du système de composants électroniques (1, 2, 3, 4) soit identifiable,
**caractérisé en ce**
- **que** le système de composants électroniques comprend un dispositif (1) destiné à générer un signal de tension alternative (5), et
- en ce que la défaillance du composant est détectable à l'aide du signal de tension alternative (5).

2. Appareil ménager selon la revendication 1, **caractérisé en ce que** le dispositif (1) destiné à générer le signal de tension alternative (5', 5") est un microprocesseur (1').

3. Appareil ménager selon la revendication 1 ou 2, **caractérisé en ce que** le signal de tension alternative est un signal rectangulaire (5).

4. Appareil ménager selon l'une quelconque des revendications 1 à 3, **caractérisé en ce**
- **que** le système de composants électroniques comprend un filtre (3) et
- en ce que le filtre (3) ne peut être traversé que par le signal de tension alternative (5).

5. Appareil ménager selon la revendication 4, **caractérisé en ce que** le filtre est un filtre passe-haut (3', 3").

6. Appareil ménager selon l'une quelconque des revendications 1 à 5, **caractérisé en ce**
- **que** le système de composants électroniques comprend un détecteur (8), et
- en ce que le signal de tension alternative (5') est détectable et/ou évaluable à l'aide du détecteur (8, 1').

7. Appareil ménager selon les revendications 4 et 6, **caractérisé en ce qu'**à l'aide du détecteur (1'), le signal de tension alternative (5') est détectable et/ou évaluable après avoir traversé le filtre (3').

8. Appareil ménager selon l'une quelconque des revendications 6 ou 7, **caractérisé en ce que** le détecteur est un microprocesseur (1').

9. Appareil ménager selon l'une quelconque des revendications précédentes, **caractérisé en ce que** le système de composants électroniques est un système de capteurs (10) et/ou un système d'acteurs (20).
